# EUROPÄISCHE PATENTSCHRIFT

(11) **EP 4 149 723 B1**
(45) Veröffentlichungstag und Bekanntmachung des Hinweises auf die Patenterteilung: **03.07.2024**
(21) Anmeldenummer: 21735146.9
(22) Anmeldetag: 11.05.2021
(51) Int. Cl.: B25J 5/02, B25J 9/04, B25J 11/00, B25J 15/00, B25J 21/00, B23Q 1/48, B23B 39/16, B23Q 1/54, B23Q 39/02, B23P 23/02

(54) **BEARBEITUNGSROBOTER ZUR SPANENDEN BEARBEITUNG**
MACHINING ROBOT FOR CHIP REMOVAL MACHINING
ROBOT D'USINAGE POUR USINAGE PAR ENLÈVEMENT DE MATIÈRE

(30) Priorität: 12.05.2020 DE 102020002815
(43) Veröffentlichungstag der Anmeldung: 22.03.2023
(73) Patentinhaber: Zimmer, Martin, 77866 Rheinau (DE)
(72) Erfinder: ZIMMER, Günther, 77866 Rheinau (DE); ZIMMER, Martin, 77866 Rheinau (DE)
(74) Vertreter: Thämer, Wolfgang
(86) Internationale Anmeldenummer: PCT/DE2021/000087
(87) Internationale Veröffentlichungsnummer: WO 2021/228296

(56) Entgegenhaltungen:
- WO-A2-2015/123349
- DE-A1-102016 216 902
- DE-A1-102017 012 075

## Beschreibung

Die Erfindung betrifft einen Bearbeitungsroboter zur spanenden Bearbeitung von Werkstücken mit zwei zueinander parallelen rotatorischen Hauptachsen und mit mindestens zwei rotatorischen Nebenachsen, wobei ein in einer ersten dieser Hauptachsen gelagerter Fußhebel und ein am freien Ende des Fußhebels in der zweiten der genannten Hauptachsen gelagerter Kniehebel eine kinematische Kette bilden, wobei eine erste der genannten Nebenachsen in einer Längsrichtung des Kniehebels orientiert ist und wobei im Kniehebel eine zweite der genannten Nebenachsen eine Bearbeitungseinheit lagert.

Aus der DE 11 2016 002 368 T5 ist ein Bearbeitungsroboter mit Schweißwerkzeugen bekannt. Der Einsatz eines derartigen Bearbeitungsroboters für spanende Bearbeitungsvorgänge kann zum erhöhten Verschleiß der Lagerungen führen.

Die Dokumente DE 10 2016 216902 A1, DE 10 2017 012075 A1 und WO 2015/123349 A2 repräsentieren den Stand der Technik.

Der vorliegenden Erfindung liegt die Problemstellung zugrunde, einen formsteifen Bearbeitungsroboter für die spanende Bearbeitung mit einem verschleißfesten Aufbau zu entwickeln.

Diese Problemstellung wird mit den Merkmalen des Hauptanspruches gelöst. Dazu ist die erste Hauptachse im Grundgestell gelagert. Die Bearbeitungseinheit ist eine von der zweiten Nebenachse durchdrungene Multifunktionseinheit mit mindestens zwei Arbeitsseiten. Eine Arbeitsseite ist eine Multifunktionsseite und die andere Arbeitsseite ist eine Hauptspindelseite. Die Multifunktionseinheit weist mindestens zwei sowohl einzeln, gruppenweise als auch gemeinsam rotatorisch antreibbare spanbildende Werkzeuge auf. Jedes dieser Werkzeuge ist mittels einer dieses Werkzeug aufnehmenden Werkzeughubvorrichtung relativ zur Multifunktionsseite anhebbar und absenkbar. Die Hauptspindelseite hat eine antreibbare Hauptspindelaufnahme hat und mit oder ohne Drehmomentabstützung ausgebildet ist. Außerdem sind zumindest die erste Hauptachse, die zweite Hauptachse und die zweite Nebenachse in einem gemeinsamen Regelkreis geregelt, sodass jede Arbeitsseite relativ zu einer Arbeitsebene bei gleichbleibendem, zwischen dieser Arbeitsseite und der Arbeitsebene eingeschlossenen Anstellwinkel verfahrbar ist.

Der beschriebene Bearbeitungsroboter hat zwei zueinander parallele Schwenkachsen, von denen eine erste Schwenkachse das Grundgestell durchdringt. Der Haupt-Arbeitsraum des Bearbeitungsroboters ist damit auf einen sichelabschnittsförmigen Abschnitt einer Normalenebene zur ersten Hauptachse begrenzt. Der Kniehebel des Bearbeitungsroboters trägt die Bearbeitungseinheit, die als Multifunktionseinheit mit mehreren Arbeitsseiten ausgebildet ist. Eine der Arbeitsseiten ist eine Multifunktionsseite, auf der mehrere angetriebene Werkzeuge, z.B. Bohrer, Fräser, Sägen, etc. angeordnet sind. Diese Werkzeuge sind einzeln oder gruppenweise z.B. mittels eines gemeinsamen, in der Multifunktionseinheit angeordneten Antriebsmotors antreibbar. Um diese Werkzeuge einzusetzen, werden die Werkzeuge aus einer eingefahrenen Ruhestellung jeweils mittels einer Werkzeughubvorrichtung in eine ausgefahrene Betriebsstellung verfahren. Eine weitere Arbeitsseite der Multifunktionseinheit ist eine Hauptspindelseite. Diese hat sowohl eine Hauptspindelaufnahme als auch eine Drehmomentabstützung. Damit können z.B. mittels eines Werkzeugwechslers, sowohl einzelne Werkzeuge eingesetzt werden als auch Werkzeugaggregate angebaut werden. Die Einbindung des Anstellwinkels der einzelnen Arbeitsseite in den Regelkreis der Hauptachsen ermöglicht beispielsweise das Herstellen langer Sägeschnitte und regelmäßiger Lochmuster. Damit kann der Bearbeitungsroboter bei kompaktem, verformungssteifen Aufbau für verschiedenartige Bearbeitungsaufgaben eingesetzt werden. Die sich aus dem Aufbau ergebende geringe Momentenbelastungen der Lagerstellen ermöglicht eine lange Lebensdauer.

Weitere Einzelheiten der Erfindung ergeben sich aus den Unteransprüchen und der nachfolgenden Beschreibung schematisch dargestellter Ausführungsformen.
- Figur 1:: Bearbeitungsroboter;
- Figur 2:: Grundgestell;
- Figur 3:: Fußhebel;
- Figur 4:: Kniehebel;
- Figur 5:: Bearbeitungseinheit, Multikopfseite;
- Figur 6:: Bearbeitungseinheit, Hauptspindelseite;
- Figur 7:: Bearbeitungsroboter bei der Werkstückbearbeitung;
- Figur 8:: Bearbeitungsroboter in einer weiteren Bearbeitungsposition;
- Figur 9:: Bearbeitungseinheit mit angeschlossenen Werkzeugaggregat und Mehrachskopf;
- Figur 10:: Verfahrbarer Bearbeitungsroboter mit Bett;
- Figur 11:: Roboterzelle mit Bearbeitungsroboter.

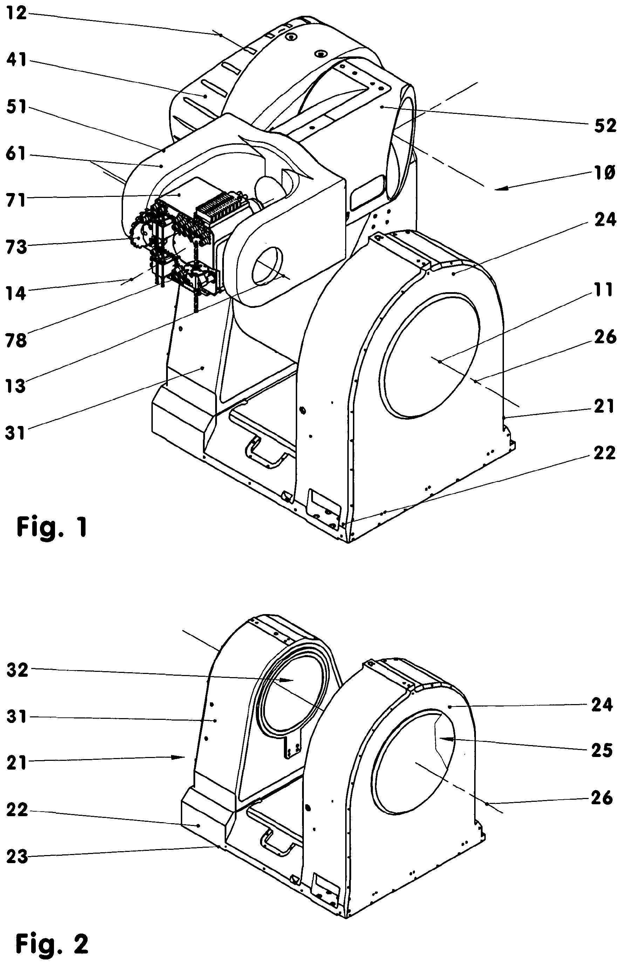

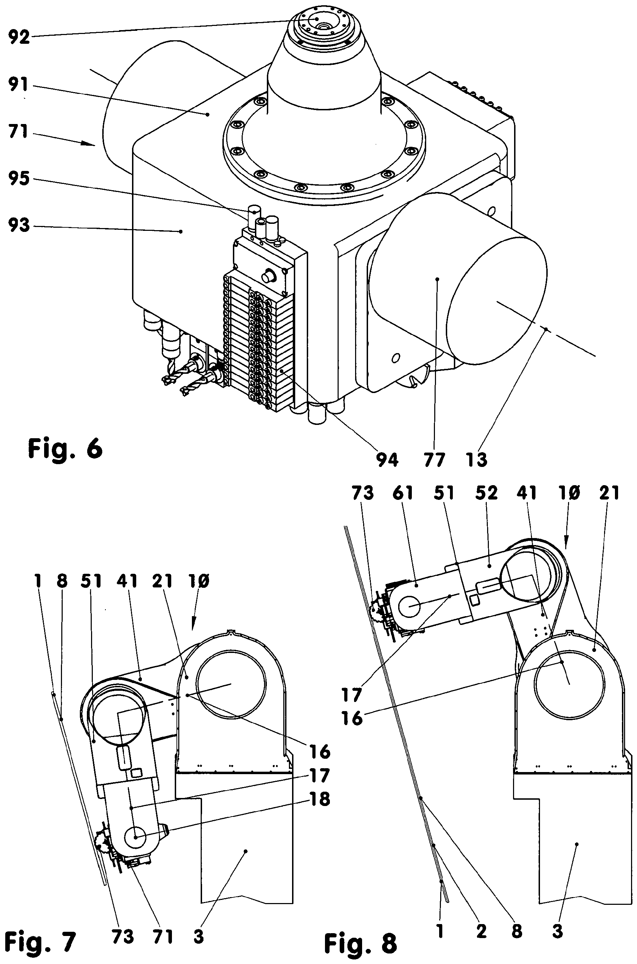

Die Figuren 1 - 6 zeigen einen Bearbeitungsroboter (10) zum Einsatz bei der spanenden Bearbeitung von Werkstücken (1). Diese Werkstücke (1) sind beispielsweise Holzplatten (1), vgl. die Figuren 7 und 8, die an einem Werkstück-Stützgestell anliegen. Die Holzplatten (1) haben beispielsweise eine Länge bis zu 2,50 Meter und eine Breite bis zu 1,50 Metern. Die Anlagefläche des Werkstück-Stützgestells ist z.B. zu einer vertikalen Ebene um einen Winkel von bis zu 30 Grad geneigt. Die Holzplatten (1) können an dem Werkstück-Stützgestell während der Bearbeitung z.B. pneumatisch fixiert sein. Hierfür kann das Werkstück-Stützgestell mittels einer Unterdruckpumpe betätigbare Saugnäpfe aufweisen. Die Werkstücke (1) können auch aus metallischen Werkstoffen, Kunststoffen, Verbundwerkstoffen, etc., bestehen.

Beispielsweise bildet eine Oberfläche (8) oder eine Seitenfläche des zu bearbeitenden Werkstücks (1) eine Arbeitsebene. Die Arbeitsebene kann jede Ebene im Raum sein, die den Arbeitsraum des Bearbeitungsroboters schneidet. Der Arbeitsraum des Bearbeitungsroboters wird durch den von den Hauptachsen bestimmten Haupt-Arbeitsraum und den von den Nebenachsen bestimmten Neben-Arbeitsraum gebildet. Bei einer gewölbten Werkstückoberfläche ist die jeweilige Arbeitsebene eine Tangentialebene an die Werkstückoberfläche im jeweiligen Eingriffspunkt des Werkzeugs.

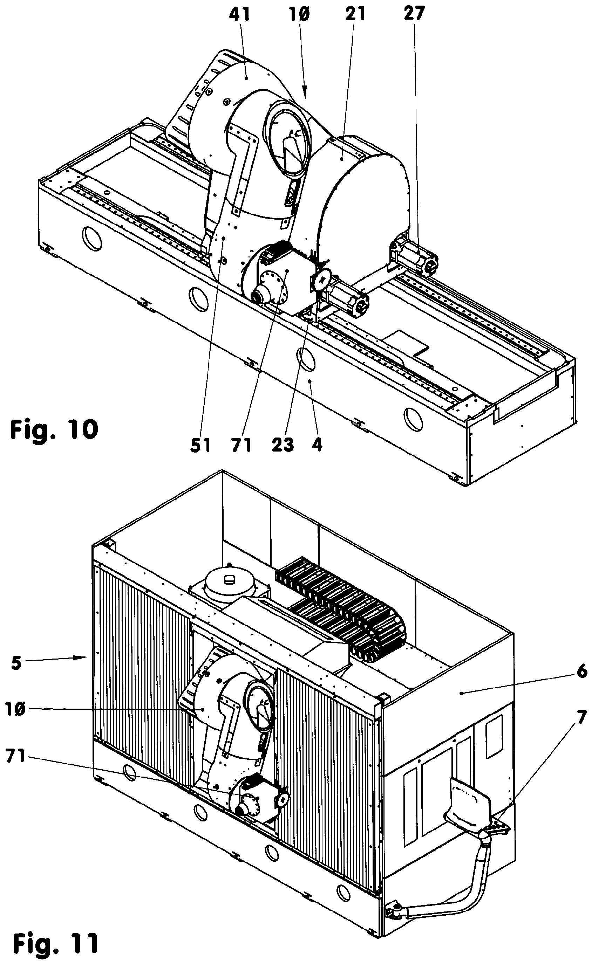

Der Bearbeitungsroboter (10) hat die Bauart eines Vertikal-Knickarmroboters (10) mit zwei, eine kinematische Kette bildenden Armen (41, 51). Der erste Arm (41) ist ein Fußhebel (41) und der zweite Arm (51) ist ein am Fußhebel (41) schwenkbar gelagerter Kniehebel (51). Der Bearbeitungsroboter (10) hat im Ausführungsbeispiel vier Freiheitsgrade. Das sind zwei rotatorische Hauptachsen (11, 12) und zwei rotatorische Nebenachsen (13, 14). Der Bearbeitungsroboter (10) hat damit eine sogenannte RR-Kinematik. Auch eine Ausführung mit mehr als vier Freiheitsgraden ist denkbar. Der Bearbeitungsroboter (10) hat ein Grundgestell (21), das beispielsweise starr auf einem Fundamentsockel (3), vgl. die Figuren 7 und 8, montiert ist. Der Bearbeitungsroboter (10) kann auch eindimensional verfahrbar auf einem Bett (4), vgl. Figur 10, angeordnet sein. Hierbei ist die Verfahrrichtung des Bearbeitungsroboters (10) beispielsweise parallel zur Förderrichtung der Werkstücke (1) orientiert. Der Verfahrantrieb, z.B. ein Torquemotor, ist bei einer derartigen Ausführungsform im Grundgestell (21) des Bearbeitungsroboters (10) angeordnet. Er verfügt beispielsweise über ein Wälzrad, das mit einer am Bett (4) angeordneten Zahnstange kämmt.

Das Grundgestell (21), vgl. Figur 2, ist im Ausführungsbeispiel U-förmig ausgebildet. Es hat beispielsweise einen Auflageflansch (22) und einen an diesem angeordneten Stützflansch (31). Im Auflageflansch (22) ist beispielsweise ein Antriebsmotor für eine erste Schwenkachse (11) angeordnet. Die erste Schwenkachse (11) ist erste Hauptachsen (11) des Bearbeitungsroboters (10). Im Stützflansch (31) sind z.B. die Energie-, Signal- und Medienleitungen vom Grundgestell (21) zu den Armen (41, 51) geführt.

Der L-förmig ausgebildete Auflageflansch (22) umfasst eine Auflageplatte (23) und eine rechtwinklig zu dieser orientierte Stützplatte (24). Der Auflageflansch (22) kann mehrteilig ausgebildet sein. Mit der Auflageplatte (23) ist der Auflageflansch (22) z.B. am Fundament befestigt. Die Stützplatte (24) hat an ihrer Innenseite eine Lageraufnahme (25). Die Lageraufnahme (25) hat einen kreisförmigen Querschnitt. Der Durchmesser der Lageraufnahme (25) beträgt im Ausführungsbeispiel 60 % des Abstands der Mittellinie (26) der Lageraufnahme (25) von der Bodenfläche des Auflageplatte (23). Beispielsweise ist die Lageraufnahme (25) an ihrer Außenseite verschlossen.

Der Stützflansch (31) ist im Ausführungsbeispiel plattenförmig ausgebildet. Er hat eine Lagerungsausnehmung (32), deren Mittellinie mit der Mittellinie (26) der Lageraufnahme (25) zusammenfällt. Der Durchmesser der Lagerungsausnehmung (32) beträgt beispielsweise 92 % des Durchmessers der Lageraufnahme (25). Die Mittellinie (26) liegt parallel zur z.B. ebenen Bodenfläche der Auflageplatte (23).

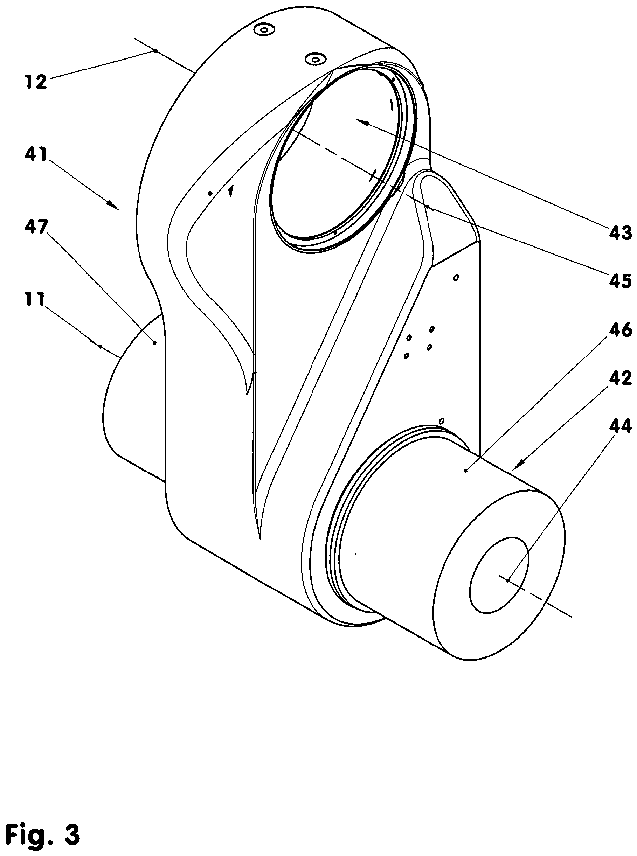

Im Grundgestell (21) ist der erste Arm (41) des Bearbeitungsroboters (10) gelagert. Dieser erste Arm (41), vgl. Figur 3, hat eine erste Lagerstelle (42) und eine zweite Lagerstelle (43). Die Mittellinien (44, 45) der beiden Lagerstellen (42, 43) sind parallel zueinander ausgebildet. Ihr Abstand zueinander ist beispielsweise um 30 % größer als der Abstand der Mittellinie (26) der Lageraufnahme (25) zur Bodenfläche.

Die erste Lagerstelle (42) weist zwei in entgegengesetzte Richtungen zeigende Lagerzapfen (46, 47) auf. Beide Lagerzapfen (46, 47) sind zylindrisch ausgebildet. Ihre Mittellinien bilden die Mittellinie (44) der ersten Lagerstelle (42). Das Durchmesserverhältnis der Lagerzapfen (46, 47) entspricht z.B. dem Durchmesserverhältnis der Lageraufnahme (25) und der Lagerungsausnehmung (32). Im Einsatz ist jeweils ein Lagerzapfen (46; 47) in der Lageraufnahme (25) bzw. in der Lagerungsausnehmung (32) z.B. wälzgelagert. Bei montiertem ersten Arm (41) bildet die Mittellinie (26, 44) die erste Schwenkachse (11) des Bearbeitungsroboters (10). Der nutzbare Schwenkwinkelbereich des ersten Arms (41) relativ zum Grundgestell (21) beträgt z.B. 120 Grad. Der nutzbare Schwenkwinkelbereich ist der Bereich, in dem ein Werkstück (1) in unveränderter Aufspannung bearbeitbar ist.

Im ersten Arm (41) ist beispielsweise auf einer Seite eine Antriebseinheit angeordnet. Auf der anderen Seite liegen im ersten Arm (41) z.B. Energie-, Medien- und Signalleitungen. Alle diese Leitungen sind innerhalb des ersten Arms (41) geführt.

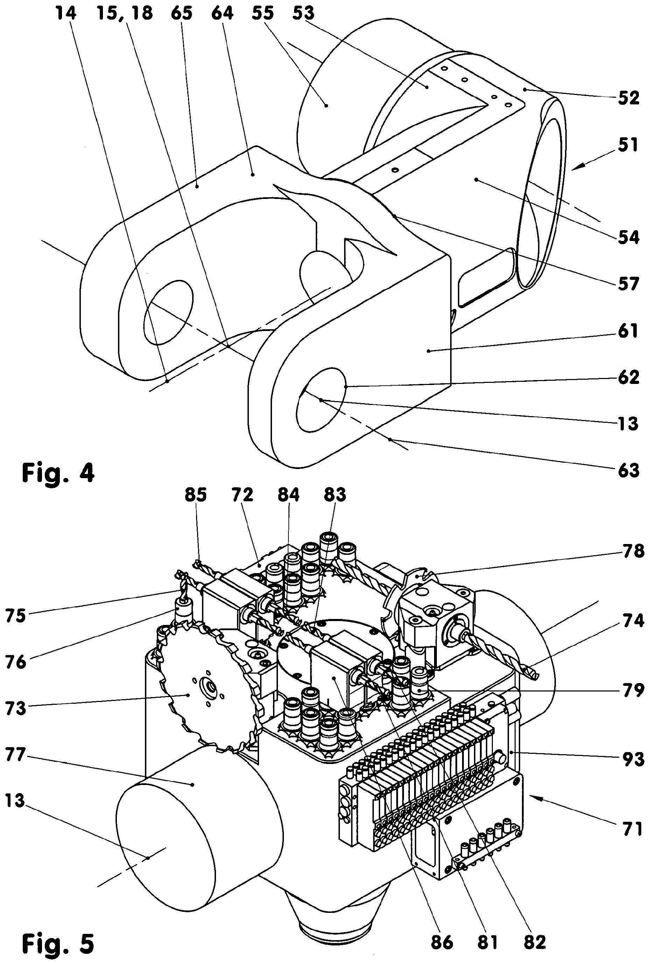

In der zweiten Lagerstelle (43) ist der zweite Arm (51), vgl. Figur 4, gelagert. Hierbei sitzt der zweite Arm (51) beispielsweise mit einem Lagerbund (55) in der zweiten Lagerstelle (43). Hier ist er beispielsweise mittels zweier Wälzlager, z.B. Schrägkugellager in O-Anordnung, gelagert. Die Mittellinie (45) der zweiten Lagerstelle (43) bildet eine zweite Schwenkachse (12) des Bearbeitungsroboters (10). Diese zweite Schwenkachse (12) ist die zweite Hauptachse (12) des Bearbeitungsroboters (10). Diese zweite Hauptachse (12) ist parallel zur ersten Hauptachse (11) orientiert. Der zweite Arm (51) kragt beispielsweise abgewinkelt aus der zweiten Lagerstelle (43) heraus. Es ist auch denkbar, die zweite Lagerstelle (43) beidseitig des zweiten Arms (51) anzuordnen. Der erste Arm (41) ist dann z.B. im Bereich der zweiten Lagerstelle (43) gabelförmig ausgebildet. Der nutzbare Schwenkwinkelbereich des zweiten Arms (51) relativ zum ersten Arm (41) beträgt im Ausführungsbeispiel 115 Grad. An der zweiten Lagerstelle (43) ist beispielsweise ein Antriebsmotor für den zweiten Arm (51) angeordnet. Auch im Bereich des zweiten Arm (51) sind die Medien-, Signal-, Strom- und Datenleitungen innerhalb des zweiten Arms (51) geführt.

Das der zweiten Lagerstelle (43) abgewandte Ende des zweiten Arms (51) ist im Ausführungsbeispiel als Teilarm (61) mit einem Aufnahmeteil (64) ausgebildet. Das Aufnahmeteil (64) hat eine Querausnehmung (62). Die Mittelachse (63) der Querausnehmung (62) bildet eine dritte Schwenkachse (13). Die dritte Schwenkachse (13) ist eine zweite Nebenachse (13) des Bearbeitungsroboters (10). Die Höhe des als Aufnahmegabel (64) ausgebildeten Aufnahmeteils (64) beträgt das 1,2-fache des Durchmessers der Querausnehmung (62). Der Abstand der zweiten Schwenkachse (12) zur dritten Schwenkachse (13) ist im Ausführungsbeispiel um 7 % größer als der Abstand der ersten Schwenkachse (11) zur zweiten Schwenkachse (12). Diese Abstände der Schwenkachsen (11, 12; 12, 13) ist im Folgenden als Fußhebellänge (16) des Fußhebels (41) und als Kniehebellänge (17) des Kniehebels (51) bezeichnet. Die jeweilige Hebellänge (16; 17) ist die Länge einer gemeinsamen Normalen zu den beiden jeweils zugehörigen Schwenkachsen (11, 12; 12, 13). Die Hebellänge (17) des Kniehebels (51) ist damit z.B. mindestens um 5 % länger als die Hebellänge (16) des ersten Armes (41). Die Kniehebellänge (17) endet an der zweite Nebenachse (13) in einem Anstoßpunkt (18). Die Bewegung des Anstoßpunktes (18) ist auf eine Normalenebene zur ersten Hauptachse (11) beschränkt. In dieser Normalenebene wird die Bewegung dieses Anstoßpunktes (18) durch die Grenzen des Haupt-Arbeitsraumes begrenzt.

Der zweite Arm (51) ist zweiteilig ausgebildet. Er hat einen in der zweiten Lagerstelle (43) gelagerten Lagerteil (52) und das Gabelteil (61). Das Gabelteil (61) ist relativ zum Lagerteil (52) um eine Arbeitsachse (14) schwenkbar. Die z.B. in der Längsrichtung des zweiten Arms (51) orientierte Arbeitsachse (14) ist eine erste Nebenachse (14) des Bearbeitungsroboters (10). Diese Arbeitsachse (14) ist im Ausführungsbeispiel in der Richtung einer gemeinsamen Normalen zur zweiten Schwenkachse (12) und zur dritten Schwenkachse (13) orientiert, sodass die Arbeitsachse (14) die dritte Schwenkachse (13) in einem Schnittpunkt (15) schneidet. Damit liegt die Arbeitsachse (14) in einer Ebene, die normal zur ersten Hauptachse (11) orientiert ist. Im Ausführungsbeispiel fällt der Schnittpunkt (15) mit dem Anstoßpunkt (18) zusammen.

Es ist auch denkbar, die dritte Schwenkachse (13) und die Arbeitsachse (14) windschief zueinander anzuordnen. Die Linie des kürzesten Abstandes zwischen der Arbeitsachse (14) und der dritten Schwenkachse (13) liegt dann in einer Normalenebene zur Arbeitsachse (14). Diese Normalenebene ist eine Tangentialebene an einen gedachten Zylinder um die erste Schwenkachse (11). Als Schnittpunkt (15) wird in diesem Fall der Schnittpunkt der genannten Linie des kürzesten Abstandes mit der Arbeitsachse (14) bezeichnet.

Das Lagerteil (52) ist beispielsweise als Winkelstück (52) ausgebildet. Es hat einen Lagerbundabschnitt (53) und einen Tragabschnitt (54). Der Lagerbundabschnitt (53) und der Tragabschnitt (54) sind rechtwinklig zueinander orientiert. Der Lagerbundabschnitt (53) umfasst den Lagerbund (55). Auf der dem Lagerbund (55) abgewandten Seite kann das Lagerteil (52) mittels eines Deckels verschlossen sein. Der Tragabschnitt (54) hat beispielsweise eine Aufnahmehülse (57). In dieser Aufnahmehülse (57) sitzt schwenkbar das Gabelteil (61). Beispielsweise ist es dort wälzgelagert.

Die Aufnahmegabel (64) hat z.B. zwei zueinander parallele Zinken (65). Die dritte Schwenkachse (13) durchdringt beide Zinken (65). Im Gabelteil (61) ist eine Bearbeitungseinheit (71) um die dritte Schwenkachse (13) schwenkbar gelagert. Die Bearbeitungseinheit (71) kann hierbei um die dritte Schwenkachse (13) mindestens um einen Schwenkwinkel von 240 Grad geschwenkt werden.

Die Figuren 5 und 6 zeigen die Bearbeitungseinheit (71). Die dargestellte Bearbeitungseinheit (71) hat zwei Schwenkzapfen (77) und mindestens zwei Arbeitsseiten (72, 91). Sie hat eine z.B. quaderförmige Hüllkontur. Die Bearbeitungseinheit (71) ist als Multifunktionseinheit (71) mit einer Vielzahl verschiedenartiger Werkzeuge (73 - 75, 78, 81 - 85) und Werkzeugaufnahmen (79, 92) ausgebildet. Die Schwenkzapfen (77) sind bei montierter Bearbeitungseinheit (71) in den Querausnehmungen (62) gelagert. Die Bearbeitungseinheit (71) ist hierbei z.B. in Wälzlagern gelagert. Zum Schwenken der Bearbeitungseinheit (71) um die dritte Schwenkachse (13) dient beispielsweise ein an der Bearbeitungseinheit (71) angeordneter Schwenkantrieb. Dieser verfügt beispielsweise über einen Torquemotor. Die Versorgungsleitungen für Strom, Medien, Daten und Signale sind beispielsweise innerhalb des zweiten Arms geführt und werden z.B. im Bereich der Schwenkzapfen (77) an die Bearbeitungseinheit (71) geführt.

Eine erste Arbeitsseite (72) der Bearbeitungseinheit (71) ist die in der Darstellung der Figur 5 obenliegende Multikopfseite (72). An dieser Multikopfseite (72) sind beispielsweise Sägewerkzeuge (73, 78) und Bohrwerkzeuge (74, 75, 81 - 85) angeordnet. Auch Schleifwerkzeuge und Fräswerkzeugs können an der Multikopfseite (72) aufgenommen werden. Diese Werkzeuge haben entweder eine geometrisch bestimmte Schneide oder eine geometrisch unbestimmte Schneide. Alle diese Werkzeuge (73, 74, 75, 78, 81 - 85) sind einzeln rotatorisch antreibbar. Sie können zusätzlich auch gruppenweise antreibbar sein. Eine Gruppe umfasst beispielsweise mehrere gleichartige Werkzeuge (73, 74, 75, 78, 81 - 85). Auch ein gemeinsamer, gleichzeitiger Antrieb mehrere unterschiedlicher Werkzeuge (73, 74, 75, 78, 81 - 85) ist denkbar. Zum Antrieb dient z.B. ein einzelner, in der Bearbeitungseinheit (71) angeordneter Antriebsmotor. An diesen Antriebsmotor werden beispielsweise die einzelnen Werkzeuge (73 - 75, 78, 81 - 85) angekuppelt. Einige der Werkzeuge (73, 74) sind normal zur Multikopfseite (72) angeordnet. Andere Werkzeuge (74, 81 - 85) sind parallel zur Multikopfseite (72) ausgerichtet. Diese Werkzeuge (74, 81 - 85) liegen im Ausführungsbeispiel jeweils in einer Tangentialebene an einen Zylinder um die zweite Nebenachse (13). Beispielsweise ist ein zweites Sägewerkzeug (78) normal zum erstgenannten Sägewerkzeug (73) orientiert. Mit diesem zweiten Sägewerkzeug (78) und mit den parallel zur Multikopfseite (72) angeordneten Bohrwerkzeugen (74, 81 - 85) ist beispielsweise die Stirnseite eines Werkstücks (1) bearbeitbar.

Um eines der Werkzeuge (73 - 75, 78, 81 - 85) einzusetzen, wird dieses beispielsweise mittels einer als Werkzeughubvorrichtung (76, 86) ausgebildeten Pinole (76, 86) in eine Arbeitsposition ausgefahren und verriegelt. Die einzelne Werkzeughubvorrichtung (76, 86) verfährt hierbei normal zur Multikopfseite (72). Bei einer gruppenweisen Ansteuerung der Werkzeuge (73 - 75, 78, 81 - 85) werden mehrere Werkzeughubvorrichtungen (76, 86) ausgefahren. Ein gruppenweiser Einsatz der Werkzeuge (73 - 75, 78, 81 - 85) erfolgt beispielsweise beim Einbringen eines Bohrbildes in ein Werkstück (1). Dabei können beispielsweise mit vier gleichzeitig angetriebenen Bohrwerkzeugen (74, 75, 81 - 85) vier Bohrungen in das Werkstück (1) eingebracht werden.

Einige der parallel zur Arbeitsseite (72) orientierten Bohrwerkzeuge (81 - 85) sind jeweils doppelt ausgebildet. Beispielsweise ist parallel zum Bohrwerkzeug (81) das z.B. identische Bohrwerkzeug (82) angeordnet. Jedes dieser beiden Bohrwerkzeuge (81, 82) ist mittels einer separaten Werkzeughubvorrichtung (86) von der dargestellten Ruheposition in eine Betriebsposition ausfahrbar und verriegelbar. Es ist auch denkbar, mehr als zwei Werkzeuge (81, 82) parallel zueinander anzuordnen.

Die einzelne der die parallel zur Multikopfseite (72) liegenden Bohrwerkzeuge (74, 81 - 85) tragenden Werkzeughubvorrichtungen (86) trägt in der Darstellung der Figur 5 zwei in entgegengesetzte Richtungen orientierte Werkzeuge (81, 83). Somit kann dieselbe Werkzeughubvorrichtung (86) sowohl bei der Bearbeitung einer rechten Stirnseite als auch bei der Bearbeitung einer linken Stirnseite eines Werkstücks (1) eingesetzt werden.

Weiterhin sind an der Multikopfseite (72) mehrere Leerpinolen (79) angeordnet. In diese Leerpinolen (79) können beispielsweise mittels eines neben dem Bearbeitungsroboter (10) angeordneten Werkzeugwechslers Werkzeuge eingesetzt werden. In den Leerpinolen (79) können auch Mess- und Prüfwerkwerkzeuge aufgenommen werden.

Die der Multikopfseite (72) abgewandte Hauptspindelseite (91) hat eine z.B. zentrale Hauptspindelaufnahme (92). In dieser kann beispielsweise ein großes Bohr- oder ein Fräswerkzeug aufgenommen werden. Die antreibbare Hauptspindelaufnahme (92) ist rotierbar ausgebildet. Als Antriebsmotor dient beispielsweise derselbe Motor, der auch zum Antrieb der Werkzeuge der Multikopfseite (72) eingesetzt wird. Außerhalb der Werkzeugaufnahme (92) hat die Hauptspindelseite (91) im Ausführungsbeispiel eine Drehmomentabstützung (95). Die Hauptspindelseite (91) kann auch ohne Drehmomentabstützung (95) ausgebildet sein.

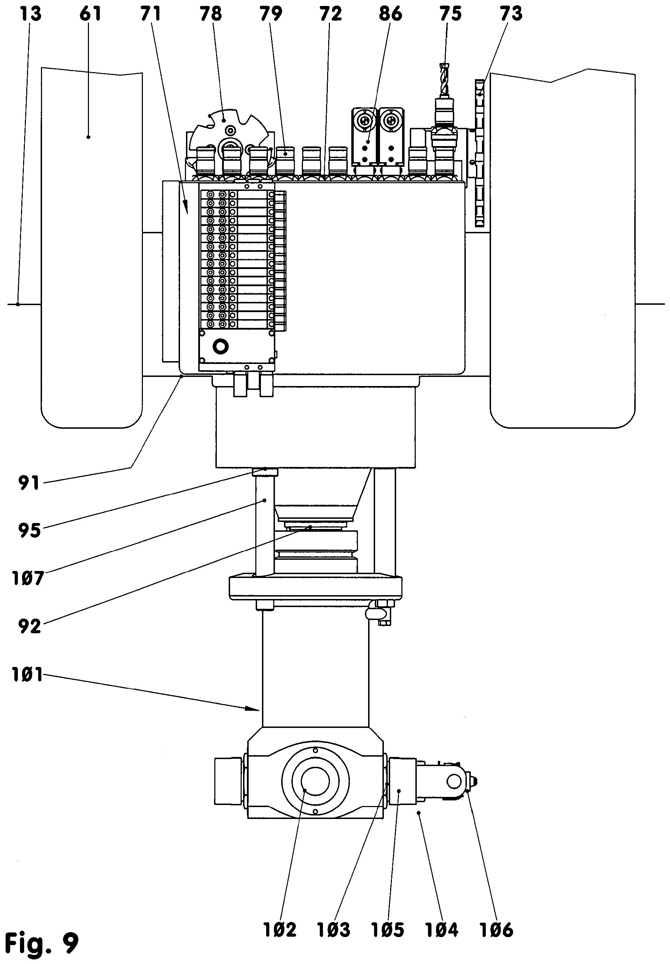

Die Figur 9 zeigt die im Kniehebel (51) gelagerte Multikopfeinheit (71) mit einem in dieser aufgenommen Werkzeugaggregat (101). Dieses Werkzeugaggregat (101) stützt sich an der Drehmomentabstützung (95) ab. Hierbei umgreifen Abstützstreben (107) des Werkzeugaggregats (101) die Drehmomentabstützung (95) z.B. formschlüssig. Beispielsweise sind durch die Drehmomentabstützung (95) pneumatische, hydraulische, elektrische, Daten und/oder Signalleitungen durchgeführt. Ein Spindelkopf einer zentralen Spindel des Werkzeugaggregats (101) greift in die Hauptspindelaufnahme (92) ein. Damit erfolgt eine Drehmomentübertragung von der Multikopfeinheit (71) über die Hauptspindelaufnahme (92) auf die Spindel des Werkzeugaggregats (101). Das Werkzeugaggregat (101) hat beispielsweise vier gleichmäßig auf einem normal zur Spindel liegenden Teilkreis angeordnete Werkzeugaufnahmen (102, 103). Beispielsweise ist die Spindel mittels eines Kegelradgetriebes mit jeder dieser Werkzeugaufnahmen (102, 103) verbunden. In diesen Werkzeugaufnahmen (102, 103) können beispielsweise Bohrwerkzeuge, Fräswerkzeuge, Prüfwerkzeuge und/oder Messwerkzeuge aufgenommen werden. Diese Werkzeuge sind beispielsweise quer zu dem Bohrwerkzeug (75) der Multikopfseite orientiert. Hiermit können beispielsweise Werkstücke (1) in einer Aufspannung bearbeitet werden, die beim Einsatz allein der Multikopfeinheit (71) ein Umspannen des Werkstücks (1) erfordern.

In einer Werkzeugaufnahme (103) sitzt in der Darstellung der Figur 9 ein Mehrachskopf (104), Dieser stützt sich über eine Drehmomentabstützung am Werkzeugaggregat (101) ab. Der Mehrachskopf (104) hat einen z.B. gabelförmig ausgebildeten Kopfträger (105), der schwenkbar eine Kopfeinheit (106) lagert. In der Darstellung der Figur 9 ist die Kopfeinheit (106) ähnlich ausgebildet wie die Multikopfeinheit (71). Zum Ein- und Auswechseln des Werkzeugaggregats (101) und/oder des Mehrachskopfes (104) und/oder eines einzelnen Werkzeugs kann der oben genannte Werkzeugwechsler eingesetzt werden.

Die Multikopfeinheit (71) kann weitere Arbeitsseiten (93) aufweisen. Beispielsweise können die beiden Seiten, die die Multikopfseite (71) und die Hauptspindelseite (91) verbinden, als weitere Arbeitsseiten (93) ausgebildet sein. Auf diesen Seiten können weitere Werkzeuge angeordnet sein. In den Darstellungen der Figuren 5 und 6 sind an diesen Seiten beispielsweise Ventilblöcke (84) und Relaisplatten angeordnet. Bei einer derartigen Ausbildung der Bearbeitungseinheit (71) kann diese beispielsweise um einen Gesamtwinkel von z.B. 330 Grad um die dritte Schwenkachse (13) geschwenkt werden. Auch ein Schwenkwinkel bis zu 450 Grad ist denkbar. Damit können sowohl mit Werkzeugen (73 - 75, 78) auf der Multikopfseite (72) als auch mit Werkzeugen auf der Hauptspindelseite (91) oder auch auf den weiteren Seiten (93) Werkstücke (1) durchgehend bearbeitet werden. Der maximale Schwenkwinkel der Bearbeitungseinheit (71) um die zweite Nebenachse (13) ist damit größer als die Summe aus dem nutzbaren Schwenkwinkelbereich des ersten Arms (41) um die erste Hauptachse (11) und aus dem nutzbaren Schwenkwinkelbereich des zweiten Arms (51) um die zweite Hauptachse (12).

Die Figuren 7 und 8 zeigen den Bearbeitungsroboter (10) bei der spanenden Bearbeitung. Das eingesetzte Werkzeug ist beispielsweise ein rotierendes Sägeblatt (73). Das Werkstück (1) ist eine Holzplatte (1), die beispielsweise in einem Winkel von 15 Grad zur Vertikalen geneigt ist.

In diesem Ausführungsbeispiel kann das Werkstück (1) relativ zum feststehenden Bearbeitungsroboter (10) in einer normal zur Darstellungsebene orientierten Förderrichtung verfahren werden. Das Verfahren des Werkstücks (1) kann während der Hauptzeit oder während der Nebenzeit der Bearbeitung erfolgen. Beispielsweise kann beim Eingriff des zweiten Sägeblattes (78) das Werkstück (1) bei stillstehender Bearbeitungseinheit (71) verfahren werden. Hiermit kann z.B. ein in der Längsrichtung des Werkstücks (1) orientierter Schlitz erzeugt werden.

Im Bearbeitungsroboter (10) werden die statischen Kräfte der Bearbeitungseinheit (71) und der Arme (41, 51) auf das Grundgestell (21) übertragen. Die Anordnung dieser Baugruppen führt dazu, dass zumindest in sämtlichen Lagerstellen der ersten Schwenkachse (11) und der zweiten Schwenkachse (12) die Radialkomponenten dieser Kräfte größer als die Axialkomponenten sind.

Die bei der Bearbeitung auf das Werkzeug wirkenden Kräfte werden über die Werkzeugeinheit (71) und die Schwenklagerungen in das Grundgestell (21) geleitet. Die Masse der Bearbeitungseinheit (71) ist beispielsweise größer als 100 Kilogramm. Die massive Bauweise und die kurzen Hebelarme bewirken eine hohe Steifigkeit des Bearbeitungsroboters (10). Die auf die Lagerstellen wirkenden Momente haben kurze Hebelarme. Die Momentenschwankungen bei Belastungsänderungen sind somit gering.

Beispielsweise beim Beginn einer Sägebearbeitung stehen der Bearbeitungsroboter (10) und das Werkstück (1) in der in der Figur 7 dargestellten Position. Das Grundgestell (21) steht auf einem Fundamentsockel (3) und ist an diesem befestigt. Der im Grundgestell (21) gelagerte erste Arm (41) steht beispielsweise in seiner unteren Endlage. Diese Endlage ist im Ausführungsbeispiel durch die Auflageplatte (23) begrenzt. In der Darstellung der Figur 7 schließt die die erste Schwenkachse (11) und die zweite Schwenkachse (12) verbindende Fußhebellänge (16) mit einer nach oben gerichteten Vertikalen einen Winkel von 105 Grad ein. Der erste Arm (41) zeigt z.B. in eine Richtung normal zum Werkstück (1). Der erste Arm (41) und der zweite Arm (51) schließen in dieser Darstellung einen Winkel von 97 Grad ein. Der zweite Arm (51) zeigt hierbei nach unten. Die Bearbeitungseinheit (71) ist gegenüber dem zweiten Arm (51) derart geschwenkt, dass das Sägewerkzeug (73) normal zum Werkstück (1) zeigt. Das Werkzeug (73) ist im Eingriff mit dem Werkstück (1).

Beim Sägen eines geraden Schlitzes (2) im Werkstück (1) wird das Sägewerkzeug (73) relativ zum Werkstück (1) beispielsweise von unten nach oben bewegt. Der Anstellwinkel, den die Arbeitsseite (71) mit der Arbeitsebene, z.B. der Oberfläche des Werkstücks (1) einschließt, bleibt konstant. Der Anstellwinkel liegt hierbei in einer Normalenebene zur zweiten Nebenachse (13). Im Ausführungsbeispiel beträgt dieser Anstellwinkel Null Grad. Die Arbeitsebene liegt in den Darstellungen der Figuren 7 und 8 parallel zur Arbeitsseite (72) der Multifunktionseinheit (71). Das Werkzeug (73) wird damit mittels der seriellen Kinematik entlang einer geraden Bewegungsbahn geführt. Hierfür sind zumindest die erste Hauptachse (11), die zweite Hauptachse (12) und die zweite Nebenachse (13) Teile eines gemeinsamen Regelkreises. Hierbei wird die Bewegung der zweiten Nebenachse (13) zu jedem Zeitpunkt des Verfahrens in Abhängigkeit der Schwenkwinkel der ersten Hauptachse (11) und des Schwenkwinkels der zweiten Hauptachse (13) eingestellt. Hierbei wird beispielsweise als Kontrollgröße der Lagewinkel der Multifunktionseinheit (71) im Raum erfasst. Zur kontinuierlichen Ermittlung des Anstellwinkels der Arbeitsseite (72, 91, 93) zur Arbeitsebene wird beispielsweise ein Beschleunigungssensor in der Bauart eines piezoresistiven Beschleunigungsaufnehmers eingesetzt. Dieser hat beispielsweise ein analoges Ausgangssignal, z.B. zwischen 4 bis 20 Milliampère. Der Schnittpunkt (15) und der Anstoßpunkt (18) verfahren bei der dargestellten Bearbeitung parallel zum Werkstück (1). Die Spur des Schnittpunktes (15) verläuft in einer Ebene, die normal zur ersten Schwenkachse (11) orientiert ist.

Die normal zur Multikopfseite (72) orientierten Werkzeuge (73, 75) und die auf der Hauptspindelseite (92) getragenen Werkzeuge sind mittels der Schwenkachsen (11, 12, 13) und der Arbeitsachse (14) jeweils innerhalb eines durch zwei zueinander parallele Ebenen begrenzten Raums bewegbar. Jede dieser Ebenen steht normal zur ersten Schwenkachse (11). Der Abstand der beiden Begrenzungsebenen für das einzelne Werkzeug (73; 74) entspricht dem doppelten Abstand des jeweiligen Werkzeugs (73; 74) zur Arbeitsachse (14). Der durch die Freiheitgrade der Nebenachsen (13, 14) bestimmte Nebenarbeitsraum für das einzelne Werkzeug (73, 75, 78) ergibt sich aus einer Summe beider Teil-Nebenarbeitsräume. Beispielsweise ergibt er sich zu einem Tangentialkreis zu einer Normalen zur zweiten Nebenachse (13), wobei der durch die zweite Nebenachse (13) beschriebene Teil-Nebenarbeitsraum einen Kreislinienabschnitt um diese zweite Nebenachse (13) beschreibt. Die Mittellinie des Tangentialkreises ist die erste Nebenachse (14). Der Neben-Arbeitsraum ergibt sich somit beispielsweise zu einem Zylindermantelabschnitt um die zweite Nebenachse (13).

Beim dargestellten Sägevorgang schwenkt der erste Arm (41) in der Darstellung der Figur 7 im Uhrzeigersinn um die erste Schwenkachse (11). Der zweite Arm (51) wird zunächst relativ zum ersten Arm (41) gegen den Uhrzeigersinn geschwenkt. Hierbei verkleinert sich der vom ersten Arm (41) und dem zweiten Arm (51) eingeschlossene Winkel. Anschließend wird bei weiterer Drehung des ersten Arms (41) im Uhrzeigersinn, der zweite Arm (51) ebenfalls im Uhrzeigersinn geschwenkt. Die dritte Schwenkachse (13) verfährt hierbei parallel zum Werkstück (1) Die Werkzeugeinheit (71) wird jeweils so geschwenkt, dass eine Normale zur jeweiligen Bearbeitungsseite (72; 91; 93) normal zum Werkstück (1) steht. Das Werkstück (1) kann damit unterbrechungsfrei und mit konstanter Bahngeschwindigkeit bearbeitet werden. Im dargestellten Ausführungsbeispiel beträgt der Schwenkwinkelbereich des ersten Arms (41) relativ zum Grundgestell (21) 86 Grad. Der Schwenkwinkelbereich des zweiten Arms (51) relativ zum ersten Arm (41) beträgt 35 Grad. Der Schwenkwinkelbereich, den die Bearbeitungseinheit (71) hierbei relativ zum zweiten Arm (51) schwenkt, beträgt in diesem Ausführungsbeispiel 83 Grad. Für die Programmierung der Bahnsteuerung wird beispielsweise eine Denavit-Hartenberg-Transformation eingesetzt.

Bei Beendigung der Bearbeitung steht der Bearbeitungsroboter (10) beispielsweise in der in der Figur 8 dargestellten Position. Das Werkzeug (73) kann nun vom Werkstück (1) abgehoben werden.

Um das Werkstück (1) in einem anderen Bereich seiner Längsachse zu bearbeiten, wird das Werkstück (1) in der Förderrichtung verfahren. Hierbei kann, beispielsweise beim Einsatz des querliegenden Sägeblatts (78), dieses Werkzeug (78) im Eingriff bleiben. Während des Verfahrens des Werkstücks (1) bleibt die Position der Multifunktionseinheit (71) im Raum z.B. unverändert. Damit kann beispielsweise ein in der Werkstücklängsrichtung orientierter Schlitz in das Werkstück (1) eingebracht werden.

Um ein Lochbild von der Oberseite (8) des Werkstücks (1) aus zu erzeugen, werden beispielsweise in mehrere der Leerpinolen (79) Bohrwerkzeuge eingesetzt. Zeitlich vor dem Werkzeugeingriff werden die Werkzeuge in die Bearbeitungsposition verfahren und in Rotation versetzt sowie der Anstellwinkel der Multifunktionseinheit (71) relativ zur Arbeitsebene eingestellt. Unter Beibehaltung des Anstellwinkels werden die Arme (41, 51) des Bearbeitungsroboters (10) so verfahren, dass alle Werkzeuge in der gleichen Richtung, z.B. in normaler Richtung, in das Werkstück (1) eindringen. Der Rückhub der Werkzeuge erfolgt ebenfalls unter Beibehaltung des Anstellwinkels zwischen der Multifunktionseinheit (71) und der Arbeitsebene. Anschließend können weitere z.B. identische Lochbilder nach Verfahren der Arme (41, 51) des Bearbeitungsroboters (10) und/oder nach Verfahren des Werkstücks (1) in der Werkstücklängsrichtung in das Werkstück (1) eingebracht werden.

Um beispielsweise eine Gruppe stirnseitiger Einsenkungen im Werkstück (1) herzustellen, werden beispielsweise die querliegenden Bohrwerkzeuge (81) und (82) eingesetzt. Nach dem Ausfahren der Werkzeuge in die Betriebsstellung, ihrem Einkuppeln an den Antriebsmotor und dem Positionieren der Multifunktionseinheit (71) im Raum, verfährt das Werkstück (1) im Vorschubbetriebsmodus in Richtung der rotierenden Werkzeuge (81, 82). Beim Rückhub wird das Werkstück (1) wieder aus den Bohrwerkzeugen (81, 82) herausgefahren. Um weitere z.B. identische Bohrbilder zu erzeugen, kann die Multifunktionseinheit (71) innerhalb des Hauptarbeitsraums unter Beibehaltung ihres Anstellwinkels zur Arbeitsebene an einen neuen Ort verfahren werden. Hierbei sichert der Regelkreis der beiden Hauptachsen (11, 12) und der zweiten Nebenachse (13) den gleichbleibenden Anstellwinkel der Multifunktionseinheit (71) relativ zur Arbeitsebene. Nun kann das Werkstück (1) wieder im Vorschubbetriebsmodus auf die rotierenden Werkzeuge (81, 82) zufahren.

Die Figur 10 zeigt einen weiteren Bearbeitungsroboter (10). Dieser ist weitgehend so aufgebaut wie der in den Figuren 1 - 8 dargestellte Bearbeitungsroboter (10). Der zweite Teilarm (61) des zweiten Arms (51) hat ein Aufnahmeteil (64), in dem die Bearbeitungseinheit (71) auskragend gelagert ist.

Der Bearbeitungsroboter (10) hat eine schlittenartig ausgebildete Auflageplatte (23). Mit dieser steht er längsverstellbar auf einem Bett (4). Der Bearbeitungsroboter (10) ist in der gemeinsamen Richtung der ersten Schwenkachse (11) und der zweiten Schwenkachse (12) verfahrbar. Er kann auch z.B. schrittweise verstellbar sein. Am Grundgestell (21) sind hierfür beispielsweise zwei Verfahrmotoren (27) angeordnet. Bei stehenden Verfahrmotoren (27) wird das Grundgestell (21) z.B. federbelastet am Bett (4) geklemmt. Zum Verfahren werden die Klemmungen beispielsweise pneumatisch gelüftet. Auch eine andere Ausbildung der Klemmungen ist denkbar.

In diesem Ausführungsbeispiel kann ein in der Werkstückförderrichtung orientierter Vorschub sowohl mittels Verfahren des Werkstücks (1) als auch durch Verfahren des Bearbeitungsroboters (10) relativ zum Bett (4) erfolgen. Auch eine Kombination beider parallel zueinander orientierter Verfahrbewegungen ist denkbar.

In der Figur 11 ist eine Roboterzelle (5) mit einem Bearbeitungsroboter (10) dargestellt. Der Bearbeitungsroboter (10) kann hierbei auf einem Fundament (3) oder auf einem Bett (4) angeordnet sein. Er kann beispielsweise nach einem der vorgenannten Ausführungsbeispiele ausgebildet sein.

Die Roboterzelle (5) hat eine Einhausung (6), die in der Darstellung der Figur 11 zumindest dreiseitig den Bearbeitungsroboter (10) umgibt. Auf der vierten Seite steht zumindest die Bearbeitungseinheit (71) aus der z.B. quaderförmigen Hüllkontur der Einhausung (6) heraus.

An der Außenseite der Einhausung (6) sind die Bedienelemente (7) der Roboterzelle (5) angeordnet. Hiermit wird beispielsweise der Bearbeitungsroboter (10) gesteuert.

Auch Kombinationen der einzelnen Ausführungsbeispiele sind denkbar.

### Bezugszeichenliste:

- 1: Werkstück, Holzplatte
- 2: gerader Schlitz in (1)
- 3: Fundamentsockel
- 4: Gestell
- 5: Roboterzelle
- 6: Einhausung
- 7: Bedienelemente
- 8: Oberfläche von (1)

- 10: Bearbeitungsroboter, Vertikal-Knickarmroboter
- 11: erste Schwenkachse, erste Hauptachse
- 12: zweite Schwenkachse, zweite Hauptachse
- 13: dritte Schwenkachse, zweite Nebenachse
- 14: Arbeitsachse, erste Nebenachse
- 15: Schnittpunkt zwischen (13) und (14)
- 16: Fußhebellänge
- 17: Kniehebellänge
- 18: Anstoßpunkt zwischen (13) und (17)

- 21: Grundgestell
- 22: Auflageflansch
- 23: Auflageplatte
- 24: Stützplatte
- 25: Lageraufnahme
- 26: Mittellinie von (25)
- 27: Verfahrmotoren

- 31: Stützflansch
- 32: Lagerungsausnehmung

- 41: erster Arm, Fußhebel
- 42: erste Lagerstelle
- 43: zweite Lagerstelle
- 44: Mittellinie von (42)
- 45: Mittellinie von (43)
- 46: Lagerzapfen
- 47: Lagerzapfen

- 51: zweiter Arm, Kniehebel
- 52: Lagerteil, Winkelstück, Teilarm von (51)
- 53: Lagerbundabschnitt
- 54: Tragabschnitt
- 55: Lagerbund

- 57: Aufnahmehülse

- 61: Gabelteil, Teilarm von (51)
- 62: Querausnehmung
- 63: Mittellinie von (62)
- 64: Aufnahmeteil, Aufnahmegabel
- 65: Zinken

- 71: Bearbeitungseinheit, Multikopfeinheit
- 72: Bearbeitungsseite, Multikopfseite
- 73: Werkzeug, Sägewerkzeug, Sägeblatt
- 74: Werkzeug, Bohrwerkzeug
- 75: Werkzeuge
- 76: Werkzeughubvorrichtung, Pinole
- 77: Schwenkzapfen
- 78: Werkzeug, Sägewerkzeug
- 79: Leerpinolen

- 81: Werkzeug, Bohrwerkzeug
- 82: Werkzeug, Bohrwerkzeug
- 83: Werkzeug, Bohrwerkzeug
- 84: Werkzeug, Bohrwerkzeug
- 85: Werkzeug, Bohrwerkzeug
- 86: Werkzeughubvorrichtung

- 91: Arbeitsseite, Hauptspindelseite
- 92: Hauptspindelaufnahme
- 93: weitere Arbeitsseite von (71)
- 94: Ventilblock
- 95: Drehmomentabstützung

- 101: Werkzeugaggregat
- 102: Werkzeugaufnahmen
- 103: Werkzeugaufnahme
- 104: Mehrachskopf
- 105: Kopfträger
- 106: Kopfeinheit
- 107: Abstützstreben

## Patentansprüche

1. Bearbeitungsroboter (10) zur spanenden Bearbeitung von Werkstücken (1) mit zwei zueinander parallelen rotatorischen Hauptachsen (11, 12) und mit mindestens zwei rotatorischen Nebenachsen (13, 14), wobei ein in einer ersten Hauptachse (11) dieser Hauptachsen (11, 12) gelagerter Fußhebel (41) und ein am freien Ende des Fußhebels (41) in der zweiten der genannten Hauptachsen (12) gelagerter Kniehebel (51) eine kinematische Kette bilden, wobei eine erste Nebenachse (14) der genannten Nebenachsen (13, 14) in einer Längsrichtung des Kniehebels (15) orientiert ist und wobei im Kniehebel (51) eine zweite (13) der genannten Nebenachsen (13, 14) eine Bearbeitungseinheit (71) lagert, wobei
- die erste Hauptachse (11) im Grundgestell (21) gelagert ist,
- die Bearbeitungseinheit (71) eine von der zweiten Nebenachse (13) durchdrungene Multifunktionseinheit (71) mit mindestens zwei Arbeitsseiten (72, 91, 93) ist,
- eine Arbeitsseite (72) eine Multifunktionsseite (72) und die andere Arbeitsseite (91) eine Hauptspindelseite (91) ist,
- die Multifunktionseinheit (71) mindestens zwei sowohl einzeln, gruppenweise als auch gemeinsam rotatorisch antreibbare spanbildende Werkzeuge (73 - 75, 78, 81 - 85) aufweist,
- jedes dieser Werkzeuge (73 - 75, 78, 81 - 85) mittels einer dieses Werkzeug (73 - 75, 78, 81 - 85) aufnehmenden Werkzeughubvorrichtung (76; 86) relativ zur Multifunktionsseite (72) anhebbar und absenkbar ist,
- die Hauptspindelseite (91) eine antreibbare Hauptspindelaufnahme (92) hat und mit oder ohne Drehmomentabstützung (95) ausgebildet ist und
- zumindest die erste Hauptachse (11), die zweite Hauptachse (12) und die zweite Nebenachse (13) in einem gemeinsamen Regelkreis geregelt sind, sodass jede Arbeitsseite (72, 91, 93) relativ zu einer Arbeitsebene bei gleichbleibendem, zwischen dieser Arbeitsseite (72, 91, 93) und der Arbeitsebene eingeschlossenen Anstellwinkel verfahrbar ist.

2. Bearbeitungsroboter (10) nach Anspruch 1, **dadurch gekennzeichnet, dass** eine durch den Abstand der zweiten Hauptachse (12) und der zweiten Nebenachse (13) definierte Kniehebellänge (17) größer ist als eine durch den Abstand der ersten Hauptachse (11) und der zweiten Hauptachse (12) definierte Fußhebellänge (16).

3. Bearbeitungsroboter (10) nach Anspruch 1, **dadurch gekennzeichnet, dass** die Bewegung eines Anstoßpunkts (18) der Kniehebellänge (17) und der zweiten Nebenachse (13) auf eine Normalenebene zur ersten Hauptachse (11) beschränkt ist.

4. Bearbeitungsroboter (10) nach Anspruch 1, **dadurch gekennzeichnet, dass** der Kniehebel (51) einen ersten Teilarm (52) und einen zweiten Teilarm (61) aufweist, die relativ zueinander um die erste Nebenachse (14) verschwenkbar sind, wobei der erste Teilarm (52) im Fußhebel (41) gelagert ist und wobei der zweite Teilarm (61) die Multifunktionseinheit (71) trägt.

5. Bearbeitungsroboter (10) nach Anspruch 4, **dadurch gekennzeichnet, dass** der zweite Teilarm (61) des Kniehebels (51) als Gabelteil (61) ausgebildet ist, in dem die Multifunktionseinheit (71) gelagert ist.

6. Bearbeitungsroboter (10) nach Anspruch 1, **dadurch gekennzeichnet, dass** mindestens ein Werkzeug (73) ein rotierbares Sägewerkzeug (73) ist.

7. Bearbeitungsroboter (10) nach Anspruch 1, **dadurch gekennzeichnet, dass** die Multifunktionseinheit (71) einen mit jedem der Werkzeuge (73, 74, 75, 78, 81 - 85) und mit der Hauptspindelaufnahme (92) kuppelbaren Antriebsmotor aufweist.

8. Bearbeitungsroboter (10) nach Anspruch 1, **dadurch gekennzeichnet, dass** er in der Längsrichtung einer die erste Hauptachse (11) enthaltenden Geraden translatorisch verfahrbar und/oder verstellbar auf einem Bett (4) angeordnet ist.

9. Bearbeitungsroboter (10) nach Anspruch 1, **dadurch gekennzeichnet, dass** er Teil einer Roboterzelle (5) ist, wobei die Roboterzelle (5) eine Einhausung (6) und außenliegende Bedienelemente (7) hat.

10. Bearbeitungsroboter (10) nach Anspruch 1, **dadurch gekennzeichnet, dass** an der Hauptspindelseite (91) ein sich an der Drehmomentabstützung (95) abstützendes Werkzeugaggregat (101) mit einer Spindel und mit mindestens einer Werkzeugaufnahme (102; 103) aufnehmbar ist.

## Claims

1. A machining robot (10) for machining workpieces (1) with two main rotatory axes (11, 12) parallel to each other and with at least two rotatory secondary axes (13, 14), wherein a foot lever (41) mounted in a first main axis (11) of these main axes (11, 12) and a knee lever (51) mounted on the free end of the foot lever (41) in the second of the mentioned main axes (12) form a kinematic chain, wherein a first minor axis (14) of the mentioned minor axes (13, 14) is orientated in a longitudinal direction of the knee lever (15) and wherein a second (13) of the mentioned minor axes (13, 14) supports a machining unit (71) in the knee lever (51), wherein
- the first main axle (11) is mounted in the base frame (21),
- the machining unit (71) is a multifunctional unit (71) with at least two working sides (72, 91, 93) penetrated by the second secondary axis (13),
- one working side (72) is a multifunction side (72), and the other working side (91) is a main spindle side (91),
- the multifunctional unit (71) comprises at least two chip-forming tools (73 - 75, 78, 81 - 85) that can be rotatably driven individually, in groups as well as together,
- each of these tools (73 - 75, 78, 81 - 85) can be raised and lowered relative to the multifunction side (72) by means of a tool lifting device (76; 86) that accommodates this tool (73 - 75, 78, 81 - 85),
- the main spindle side (91) comprises an driven main-spindle holder (92) and is designed with or without torque support (95) and
- at least the first main axis (11), the second main axis (12) and the second secondary axis (13) are regulated in a common control circuit, so that each working side (72, 91, 93) can be moved relative to a working plane while maintaining the same angle of attack between that working side (72, 91, 93) and the working plane.

2. The machining robot (10) according to Claim 1, **characterized in that** a knee-lever length (17) defined by the distance of the second main axis (12) and the second secondary axis (13) is greater than a foot-lever length (16) defined by the distance of the first main axis (11) and the second main axis (12).

3. The machining robot (10) according to Claim 1, **characterized in that** the movement of an impact point (18) of the knee-lever length (17) and the second secondary axis (13) is limited to a normal plane to the first main axis (11).

4. The machining robot (10) according to Claim 1, **characterized in that** the knee lever (51) comprises a first sub-arm (52) and a second sub-arm (61) which can be swivelled relative to each other around the first minor axis (14), wherein the first sub-arm (52) is mounted in the foot lever (41) and wherein the second sub-arm (61) supports the multifunctional unit (71).

5. The machining robot (10) according to Claim 4, **characterized in that** the second sub-arm (61) of the knee lever (51) is designed as a fork part (61) in which the multifunctional unit (71) is mounted.

6. The machining robot (10) according to Claim 1, **characterized in that** at least one tool (73) is a rotatable sawing tool (73).

7. The machining robot (10) according to Claim 1, **characterized in that** the multifunctional unit (71) comprises a drive motor that can be coupled with each of the tools (73, 74, 75, 78, 81 - 85) and with the main-spindle holder (92).

8. The machining robot (10) according to Claim 1, **characterized in that** it is movable and/or adjustable in a translatory manner on a bed (4) in the longitudinal direction of a straight line containing the first main axis (11).

9. The machining robot (10) according to Claim 1, **characterized in that** it is part of a robot cell (5), wherein the robot cell (5) has a housing (6) and external operating elements (7).

10. The machining robot (10) according to Claim 1, **characterized in that**, on the main spindle side (91), a tool unit (101) supporting itself on the torque support (95) can be accommodated by a spindle and with at least one tool holder (102; 103).

## Revendications

1. Robot d'usinage (10) pour l'usinage par enlèvement de copeaux de pièces (1) avec deux axes principaux (11, 12) rotatifs parallèles l'un par rapport à l'autre et avec au moins deux axes secondaires rotatifs (13, 14), sachant qu'un levier de base (41) logé dans un premier axe principal (11) de ces axes principaux (11, 12) et un levier à genouillère (51) logé à l'extrémité libre du levier de base (41) dans le deuxième axes principaux (12) cités forment une chaîne cinématique, sachant qu'un premier axe secondaire (14) des axes secondaires (13, 14) cités est orienté dans une direction longitudinale du levier à genouillère (51) et sachant que dans le levier à genouillère (15) un deuxième (13) axes secondaires (13, 14) cités loge une unité d'usinage (71), sachant que
- le premier axe principal (11) est logé dans le châssis de base (21),
- l'unité d'usinage (71) est une unité multifonctionnelle (71) traversée par le deuxième axe secondaire (13) avec au moins deux côtés de travail (72, 91, 93),
- un côté de travail (72) est un côté multifonctionnel (72) et l'autre côté de travail (91) un côté de broche principale (91),
- l'unité multifonctionnelle (71) comporte au moins deux outils (73 - 75, 78, 81 - 85) formant des copeaux pouvant être entraînés en rotation tant individuellement, en groupe qu'en commun,
- chacun de ces outils (73 - 75, 78, 81 - 85) peut être levé et abaissé par rapport au côté multifonctionnel (72) au moyen d'un dispositif de levage d'outil (76 ; 86) logeant cet outil (73 - 75, 78, 81 - 85),
- le côté de broche principale (91) possède un logement de broche principale (92) et est constitué avec ou sans support de couple (95), et
- au moins le premier axe principal (11), le deuxième axe principal (12) et le deuxième axe secondaire (13) sont réglés dans un circuit de réglage commun de telle manière que chaque côté de travail (72, 91, 93) peut être déplacé par rapport à un plan de travail à un angle d'attaque constant, compris entre ce côté de travail (72, 91, 93) et le plan de travail.

2. Robot d'usinage (10) selon la revendication 1, **caractérisé en ce qu'**une longueur de levier à genouillère (17) définie par la distance du deuxième axe principal (12) et du deuxième axe secondaire (13) est plus grande qu'une longueur de levier de base (16) définie par la distance du premier axe principal (11) et du deuxième axe principal (12).

3. Robot d'usinage (10) selon la revendication 1, **caractérisé en ce que** le mouvement d'un point de butée (18) de la longueur de levier à genouillère (17) et du deuxième axe secondaire (13) est limité à un plan normal par rapport au premier axe principal (11).

4. Robot d'usinage (10) selon la revendication 1, **caractérisé en ce que** le levier à genouillère (51) comporte une première partie de bras (52) et une deuxième partie de bras (61), qui peuvent pivoter l'une par rapport à l'autre autour du premier axe secondaire (14), sachant que la première partie de bras (52) est logée dans le levier de base (41) et sachant que la deuxième partie de bras (61) porte l'unité multifonctionnelle (71).

5. Robot d'usinage (10) selon la revendication 4, **caractérisé en ce que** la deuxième partie de bras (61) du levier à genouillère (51) est constituée sous la forme d'une pièce fourchue (61) dans laquelle est logée l'unité multifonctionnelle (71).

6. Robot d'usinage (10) selon la revendication 1, **caractérisé en ce qu'**au moins un outil (73), est un outil de sciage rotatif (73).

7. Robot d'usinage (10) selon la revendication 1, **caractérisé en ce que** l'unité multifonctionnelle (71) comporte un moteur d'entraînement pouvant être couplé avec chacun des outils (73, 74, 75, 78, 81 - 85) et avec le logement de broche principal (92).

8. Robot d'usinage (10) selon la revendication 1, **caractérisé en ce qu'**il est disposé sur un banc (4) pouvant être déplacé et/ou réglé de façon translatoire dans la direction longitudinale d'une droite contenant le premier axe principal (11).

9. Robot d'usinage (10) selon la revendication 1, **caractérisé en ce qu'**il fait partie d'une cellule robotique (5), sachant que la cellule robotique (5) possède un boîtier (6) et des éléments de commande extérieurs (7).

10. Robot d'usinage (10) selon la revendication 1, **caractérisé en ce qu'**un ensemble d'outil (101) avec une broche et avec au moins un porte-outil (102 ; 103) s'appuyant au support de couple (95) peut être logé sur le côté de broche principale (91).
